# FASCICULE DE BREVET EUROPEEN

(11) **EP 4 366 957 B1**
(45) Date de publication et mention de la délivrance du brevet: **30.07.2025**
(21) Numéro de dépôt: 22735015.4
(22) Date de dépôt: 03.06.2022
(51) Int. Cl.: B60B 31/00, B60B 31/02, B60B 1/00, B60B 1/04

(54) **PISTOLET D'ÉJECTION D'UN RAYON DANS UN ORIFICE D'UN MOYEU D'UNE ROUE À RAYONS**
PISTOLE ZUM AUSSTOSSEN EINER SPEICHE IN EIN LOCH IN EINER NABE EINES SPEICHENRADS
GUN FOR EJECTING A SPOKE INTO A HOLE IN A HUB OF A SPOKE WHEEL

(30) Priorité: 17.08.2021 FR 2108729
(43) Date de publication de la demande: 15.05.2024
(73) Titulaire: BIKEBOTIX, 74730 Villaz (FR)
(72) Inventeur: GAILLARD, Emmanuel, 74370 VILLAZ (FR); RODIER, Jean Louis, 74800 Saint-Pierre en Faucigny (FR)
(74) Mandataire: Ipsilon Lyon
(86) Numéro de dépôt international: PCT/FR2022/051064
(87) Numéro de publication internationale: WO 2023/021245

(56) Documents cités:
- EP-B1- 0 082 159
- US-A- 4 427 047
- US-B1- 6 401 337

## Description

### Domaine technique

La présente invention se rapporte au domaine technique des dispositifs d'éjection d'un rayon dans un orifice d'un moyeu d'une roue à rayons destinée à équiper des véhicules de locomotion, comme des vélos ou encore des motocyclettes.

### Art antérieur

Les moyeux des roues à rayons comportent généralement une portion centrale cylindrique montée libre en rotation autour d'un axe, et bordée à ses deux extrémités par des flasques perpendiculaires, comportant chacun une couronne d'orifices destinés à recevoir des rayons pour relier le moyeu à la jante de la roue à rayon.

Il est notamment connu de l'art antérieur d'enfiler les rayons dans les orifices du moyeu par l'intermédiaire de dispositifs d'éjection, appelés pistolets, ou « Gun » en anglais pour réaliser cette opération de manière rapide et automatique.

Ces dispositifs d'éjection d'un rayon dans un orifice d'un moyeu comprennent un canon apte à éjecter des rayons. Les rayons sont notamment du type comprenant une partie coudée pourvue d'une tête. L'éjection du rayon est réalisée par un système de piston exerçant une force de poussée axiale au niveau de la tête du rayon.

Le système de piston est généralement entrainé et commandé de façon pneumatique ou encore hydraulique comme le décrit le document WO2013/110321.

Cependant, de tels dispositifs de commande possèdent l'inconvénient d'avoir des mouvements d'éjection du système de piston qui ne sont pas optimisés notamment, lorsque le moyeu doit recevoir des rayons de tailles différentes, par exemple.

De plus, ces dispositifs d'éjection de rayons présentent l'inconvénient d'être bruyants.

Une autre difficulté dans l'éjection des rayons réside dans l'orientation de la partie terminale coudée du rayon qui peut engendrer un blocage du rayon lorsqu'elle n'est pas maîtrisée.

Il est également connu les documents US6401337, EP0082159 et US4427047, mais aucun d'entre eux ne permet, ni n'est configuré pour s'adapter aux différentes tailles de rayons à éjecter, parfois sur le même moyeu.

### Exposé de l'invention

L'un des buts de l'invention est donc de proposer un dispositif d'éjection d'un rayon dans un orifice d'un moyeu d'une roue à rayons, qui soit adaptable à la taille des rayons à éjecter.

Un autre objectif de l'invention est de fournir un tel dispositif d'éjection réduisant le coût de fabrication d'un moyen d'une roue à rayon.

Encore un autre objectif de l'invention est de fournir un dispositif d'éjection d'un rayon possédant une nuisance sonore faible.

Un autre objectif de l'invention est de fournir un tel dispositif d'éjection dans lequel l'orientation de la partie coudée du rayon est maîtrisée lors de l'éjection du rayon.

À cet effet, il a été mis au point un dispositif d'éjection d'un rayon dans un orifice d'un moyeu d'une roue à rayons, le dispositif comprend un canon dans lequel est inséré un rayon avec une partie coudée pourvue d'une tête formant une pastille, le dispositif comprend un système de poussée axiale comportant un piston déplaçable dans le canon pour exercer une force de poussée axiale au niveau de la tête du rayon pour éjecter le rayon.

Selon l'invention, le système de poussée axiale est déplacé par un moteur électrique.

Le moteur électrique peut être tout type de moteur électrique, par exemple un moteur linéaire, ou de façon préférée un moteur sans balais.

De cette manière, l'entrainement du piston est réalisé par un moteur électrique qui permet de régler de manière plus aisée la position et la vitesse dudit piston. Ainsi, le déplacement du piston est optimisé, ce qui permet de réduire par conséquent le temps de production d'un moyeu de roue à rayons, et ainsi son coût de production. Notamment, lorsqu'il convient d'éjecter des rayons de tailles différentes, le piston peut revenir en arrière d'une distance nécessaire et suffisante pour éjecter le rayon. Si le rayon à éjecter est plus court, la course arrière du piston peut être réduite, ce qui réduit le temps d'éjection du rayon et améliore la productivité.

Bien entendu, le système de moteur électrique est beaucoup moins bruyant que les dispositifs pneumatiques de l'art antérieur.

Selon une forme de réalisation particulière, le système de poussée axiale comprend une tige reliée au piston, la tige étant déplacée par le moteur électrique, par l'intermédiaire de moyens d'entraînement.

Les moyens d'entraînement sont, par exemple, sous la forme d'un premier galet positionné en appui sur la tige et entrainé en rotation par le moteur électrique.

De préférence, les moyens d'entraînement comprennent un deuxième galet, monté libre en rotation, et positionné en contre appui sur la tige par rapport au premier galet.

Selon une forme de réalisation particulière, le piston comprend une face de contact avec la tête du rayon qui présente une forme en creux, de préférence tronconique, dans laquelle vient se loger ladite tête du rayon.

D'une manière générale, le canon du dispositif d'éjection comprend une fente permettant le chargement d'un rayon.

Afin de maîtriser l'orientation de la partie coudée du rayon lors de son éjection, le dispositif comprend un système de poussée radiale du rayon.

De cette manière, la combinaison d'un appui axial contre la tête du rayon, et d'une force de poussée radiale du rayon, permet de forcer la partie coudée à s'orienter dans une direction opposée à la force de poussée radiale, ce qui permet donc de maîtriser l'orientation de la partie coudée du rayon.

De préférence, le système de poussée radiale comprend un vérin apte à exercer une force d'appui, par exemple sur une languette montée pivotante à l'intérieur du canon, entre une position d'appui contre le rayon et une position libre, afin d'orienter de manière adéquate la tête du rayon avant son éjection.

Avantageusement, le dispositif d'éjection comprend des moyens de détection d'un rayon à éjecter dans le canon, et/ou de détection d'une position arrière du piston et/ou de détection d'une position arrière de la tige.

### Brève description des dessins

D'autres avantages et caractéristiques ressortiront mieux de la description qui va suivre, donnée à titre d'exemple non limitatif, du dispositif selon l'invention, à partir des dessins annexés dans lesquels :
[Fig. 1] est une vue en perspective du dispositif d'éjection d'un rayon de la présente invention, des capots de protection ayant été masqués.
[Fig. 2] est une vue en perspective du dispositif d'éjection illustrant en détail le système de poussée axiale, des capots de protection et la partie supérieure du canon ayant été masqués.
[Fig. 3] est une vue isolée du système de poussée axiale.
[Fig. 4] est une vue en perspective du système de poussée radiale.
[Fig. 5] est une représentation en perspective du rayon.

### Description détaillée de l'invention

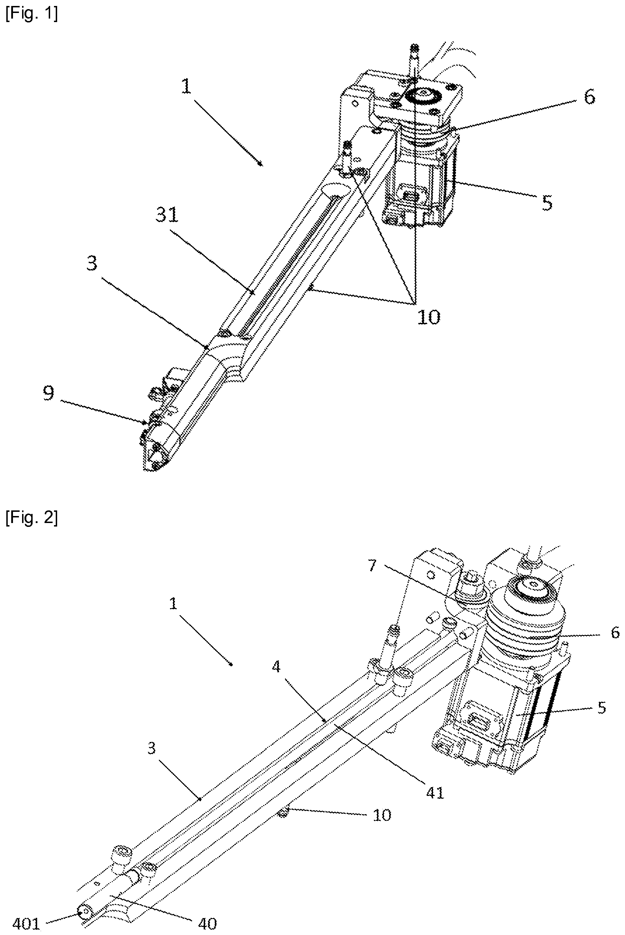

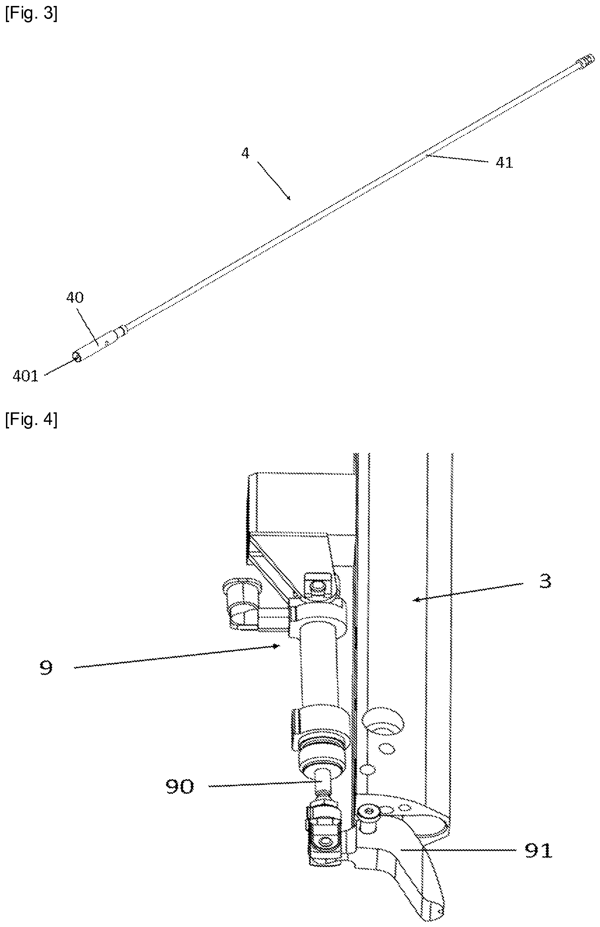

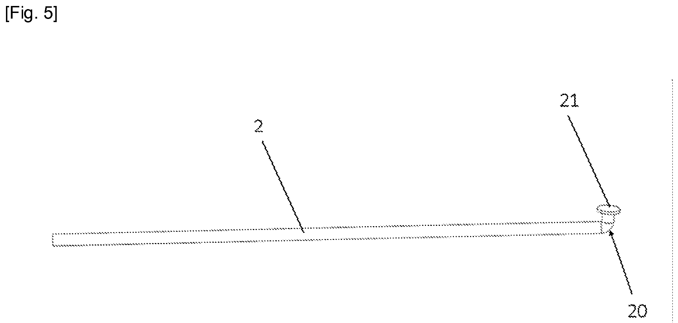

En référence aux figures 1 à 9, la présente invention concerne un dispositif d'éjection (1) d'un rayon (2) dans un orifice d'un moyeu d'une roue à rayons (2).

L'invention vise notamment à réduire les nuisances sonores de ces dispositifs d'éjection (1), tout en optimisant le déplacement du système de poussée axiale (4) pour s'adapter aux tailles différentes de rayons (2), et réduire le coût de fabrication du moyeu.

Le dispositif d'éjection (1) selon l'invention comprend un canon (3) dans lequel est destiné à être inséré un rayon (2) avec une partie coudée (20) pourvue d'une tête (21).

L'approvisionnement du rayon (2) est effectué par des paniers, préférentiellement positionnés de part et d'autre du canon (3), venant charger de façon isolée, un rayon (2) par le biais d'une fente (31) positionnée sur le canon (3).

Le dispositif (1) comprend un système de poussée axiale (4) comportant une tige (41) reliée à un piston (40).

La tige (41) est entrainée par un moteur électrique (5), par l'intermédiaire de moyens d'entraînement, ces derniers peuvent se présenter par exemple sous la forme de deux galets (6, 7), pourvus chacun par exemple d'une rainure annulaire complémentaire à la section de la tige (41), et positionnés de part et d'autre de la tige pour rouler contre la tige. L'un des galets (6) est entrainé par le moteur électrique (5), l'autre galet (7) réalise le contre appui et est monté libre en rotation.

Le moteur électrique (5) selon l'invention est un moteur linéaire ou sans balais pilotable en position, en vitesse et en effort.

Le moteur électrique (5) mis en œuvre dans l'invention permet de réaliser un pilotage en effort, en vitesse et en position de la tige (41) en changeant les valeurs de son champ magnétique. Ainsi, le moteur est capable de réaliser des accélérations, de régler la vitesse et la précision de positionnement de la tige (41) de façon optimale afin de s'adapter aux différentes tailles de rayons (2) à éjecter, parfois sur un même moyeu.

Sans sortir du cadre de l'invention, les moyens d'entraînement peuvent se présenter sous la forme, par exemple, d'un système de poulie, ou encore de courroies, ou tout autre moyen d'entrainement approprié.

Le moteur électrique (5) permet le déplacement de la tige (41) d'avant en arrière réalisant le retour en arrière du piston (40) à la suite de l'éjection du rayon (2).

Ceci permet donc de déplacer le piston (40) dans le canon (3) et d'exercer, une force de poussée axiale au niveau de la tête (21) du rayon (2) pour éjecter ledit rayon (2).

Lors de la fabrication d'un moyeu de roue à rayons (2), la taille des rayons (2) à insérer peut varier. Ainsi, le dispositif d'éjection (1) doit être réglable afin d'optimiser le système d'éjection d'un rayon (2), et de diminuer les coûts de production d'un moyeu.

L'utilisation d'un moteur électrique (5) permet ainsi de piloter aisément, la vitesse et la longueur de déplacement du piston (40), notamment pour s'adapter à la taille de rayons (2), tout en réduisant le bruit émis par le dispositif (1).

Ainsi, le mouvement de la tige (41) va entrainer le déplacement du piston (40) à l'intérieur du canon afin d'éjecter le rayon (2) positionné dans le canon (3) du dispositif d'éjection (1).

Le piston (40) comprend une face de contact (401) avec la tête (21) du rayon (2), qui présente une forme en creux, par exemple tronconique, dans laquelle vient se loger ladite tête (21).

La face de contact (401) comprend éventuellement une portion évidée radialement, non représentée, permettant de guider la tête (21) du rayon (2) lors de son chargement.

Après chargement, la partie coudée (20) du rayon (2) se retrouve en appui sur la face de contact (401) et la tête (21) du rayon (2) se retrouve positionnée au centre de la forme en creux de la face de contact (401) du piston (40).

Le canon (3) est équipé au niveau d'une extrémité de sortie d'un module de prolongation afin de pouvoir maîtriser l'orientation de la partie coudée (20) du rayon (2). À cet effet, le module de prolongation comprend un système de poussée radiale (9) du rayon (2).

Le système de poussée radiale (9) est par exemple composé d'un vérin (90) apte à exercer une force d'appui sur une languette (91) montée pivotante à l'intérieur du canon (3), entre une position d'appui radial contre le rayon (2) et une position libre, afin d'orienter de manière adéquate la tête (21) du rayon (2) avant son éjection.

De cette manière, la combinaison d'un appui axial contre la tête (21) du rayon (2), et d'une force de poussée radiale du rayon (2), permet de forcer la partie coudée (20) à s'orienter dans une direction opposée à la force de poussée radiale, ce qui permet donc de maîtriser l'orientation de la partie coudée (20) du rayon (2).

Le dispositif d'éjection (1) comprend aussi des moyens de détection (10), comme des capteurs, permettant de vérifier la présence d'un rayon (2) à éjecter dans le canon (3).

Dans un mode de réalisation préféré, le dispositif (1) comprend plusieurs moyens de détection (10) permettant de contrôler le positionnement de la tige (41) et/ou du piston (40) du système de poussée axiale (4) dans une position arrière.

Le piston (40) peut comprendre, en outre, une clavette, non représentée, destinée à être guidée par un couloir (30) complémentaire ménagé dans le canon (3) afin d'empêcher toute rotation du piston (40).

Dans un mode de réalisation particulier, le couloir (30) débouche sur la fente (31).

Il ressort de ce qui précède que l'invention fournit bien un dispositif d'éjection (1) d'un rayon (2) dans un orifice d'un moyeu d'une roue à rayons (2), réalisant des mouvements d'éjection optimisés, notamment en vitesse et en course, pour s'adapter aux tailles différentes des rayons (2) afin de réduire le coût de production d'un tel moyeu de roue à rayons (2). Les nuisances sonores liées à l'utilisation du dispositif (1) selon l'invention sont réduites.

## Revendications

1. Dispositif d'éjection (1) d'un rayon (2) dans un orifice d'un moyeu d'une roue à rayons (2), le dispositif (1) comprend un canon (3) dans lequel est inséré un rayon (2) avec une partie coudée (20) pourvue d'une tête (21), le dispositif comprend un système de poussée axiale (4) comportant un piston (40) déplaçable dans le canon (3) pour exercer une force de poussée axiale (4) au niveau de la tête (21) du rayon (2) pour éjecter le rayon (2), **caractérisé en ce que** le système de poussée axiale (4) est déplacé par un moteur électrique (5) linéaire ou sans balais pilotable en position, en vitesse et en effort.

2. Dispositif d'éjection (1) selon la revendication 1, **caractérisé en ce que** le système de poussée axiale (4) comprend une tige (41) reliée au piston (40), la tige (41) étant déplacée par le moteur électrique (5) par l'intermédiaire de moyens d'entraînement.

3. Dispositif d'éjection (1) selon la revendication 2, **caractérisé en ce que** les moyens d'entraînement sont sous la forme d'un premier galet (6) positionné en appui sur la tige (41) et entrainé en rotation par le moteur électrique (5).

4. Dispositif d'éjection (1) selon la revendication 3, **caractérisé en ce que** les moyens d'entraînement comprennent un deuxième galet (7), monté libre en rotation, et positionné en contre appui sur la tige (41) par rapport au premier galet (6).

5. Dispositif d'éjection (1) selon la revendication 1, **caractérisé en ce que** le piston (40) comprend une face de contact (401) avec la tête (21) du rayon (2) qui présente une forme en creux dans laquelle vient se loger ladite tête (21) du rayon (2).

6. Dispositif d'éjection (1) selon la revendication 1, **caractérisé en ce que** le canon (3) comprend un système de poussée radiale (9) du rayon (2) afin d'orienter de manière adéquate la tête (21) du rayon (2) avant son éjection.

7. Dispositif d'éjection (1) selon la revendication 6, **caractérisé en ce que** le système de poussée radiale (9) comprend un vérin (90) apte à exercer une force d'appui sur une languette (91) montée pivotante à l'intérieur du canon (3) entre une position d'appui contre le rayon (2) et une position libre.

8. Dispositif d'éjection (1) selon la revendication 1, **caractérisé en ce qu'**il comprend des moyens de détection (10) d'un rayon (2) à éjecter dans le canon (3) et/ou de détection d'une position arrière du piston (40) et/ou de détection d'une position arrière de la tige (41).

## Patentansprüche

1. Eine Auswurfvorrichtung (1) für eine Speiche (2) in eine Öffnung einer Nabe eines Speichenrads (2), die Vorrichtung (1) umfasst einen Lauf (3), in den eine Speiche (2) mit einem gebogenen Abschnitt (20), der mit einem Kopf (21) versehen ist, eingeführt wird, die Vorrichtung umfasst ein axiales Drucksystem (4), das einen Kolben (40) umfasst, der im Lauf (3) beweglich ist, um eine axiale Druckkraft (4) am Kopf (21) der Speiche (2) auszuüben, um die Speiche (2) auszuwerfen, **dadurch gekennzeichnet, dass** das axiale Drucksystem (4) von einem elektrischen Motor (5) bewegt wird, der linear oder bürstenlos ist und in Position, Geschwindigkeit und Kraft steuerbar ist.

2. Die Auswurfvorrichtung (1) nach Anspruch 1, **dadurch gekennzeichnet, dass** das axiale Drucksystem (4) eine Stange (41) umfasst, die mit dem Kolben (40) verbunden ist, wobei die Stange (41) durch den elektrischen Motor (5) über Antriebsmittel bewegt wird.

3. Die Auswurfvorrichtung (1) nach Anspruch 2, **dadurch gekennzeichnet, dass** die Antriebsmittel in Form eines ersten Rollers (6) vorliegen, der in Unterstützung auf der Stange (41) positioniert ist und durch den elektrischen Motor (5) in Rotation angetrieben wird.

4. Die Auswurfvorrichtung (1) nach Anspruch 3, **dadurch gekennzeichnet, dass** die Antriebsmittel einen zweiten Roller (7) umfassen, der frei drehbar ist und in Gegenstütze auf der Stange (41) relativ zu dem ersten Roller (6) positioniert ist.

5. Die Auswurfvorrichtung (1) nach Anspruch 1, **dadurch gekennzeichnet, dass** der Kolben (40) eine Kontaktfläche (401) mit dem Kopf (21) der Speiche (2) umfasst, die eine hohle Form hat, in der der Kopf (21) der Speiche (2) untergebracht ist.

6. Die Auswurfvorrichtung (1) nach Anspruch 1, **dadurch gekennzeichnet, dass** der Lauf (3) ein radiales Drucksystem (9) für die Speiche (2) umfasst, um den Kopf (21) der Speiche (2) vor dem Auswurf angemessen auszurichten.

7. Die Auswurfvorrichtung (1) nach Anspruch 6, **dadurch gekennzeichnet, dass** das radiale Drucksystem (9) einen Zylinder (90) umfasst, der in der Lage ist, eine Stützkraft auf eine Lasche (91) auszuüben, die innerhalb des Laufs (3) zwischen einer Stützposition gegen die Speiche (2) und einer Freiposition schwenkbar montiert ist.

8. Die Auswurfvorrichtung (1) nach Anspruch 1, **dadurch gekennzeichnet, dass** sie Erkennungsmittel (10) umfasst, um eine Speiche (2) im Lauf (3) zu erkennen, die ausgeworfen werden soll, und/oder eine hintere Position des Kolbens (40) und/oder eine hintere Position der Stange (41) zu erkennen.

## Claims

1. An ejection device (1) for a spoke (2) into an orifice of a hub of a spoked wheel (2), the device (1) comprises a barrel (3) in which a spoke (2) with a bent portion (20) provided with a head (21) is inserted, the device comprises an axial pushing system (4) including a piston (40) movable in the barrel (3) to exert an axial pushing force (4) at the head (21) of the spoke (2) to eject the spoke (2), **characterized in that** the axial pushing system (4) is moved by an electric motor (5) which is linear or brushless and controllable in position, speed, and force.

2. The ejection device (1) according to claim 1, **characterized in that** the axial pushing system (4) comprises a rod (41) connected to the piston (40), the rod (41) being moved by the electric motor (5) via driving means.

3. The ejection device (1) according to claim 2, **characterized in that** the driving means are in the form of a first roller (6) positioned in support on the rod (41) and driven in rotation by the electric motor (5).

4. The ejection device (1) according to claim 3, **characterized in that** the driving means comprise a second roller (7), freely rotatable, and positioned in counter support on the rod (41) relative to the first roller (6).

5. The ejection device (1) according to claim 1, **characterized in that** the piston (40) comprises a contact face (401) with the head (21) of the spoke (2) which has a hollow shape in which said head (21) of the spoke (2) is lodged.

6. The ejection device (1) according to claim 1, **characterized in that** the barrel (3) comprises a radial pushing system (9) for the spoke (2) to adequately orient the head (21) of the spoke (2) before its ejection.

7. The ejection device (1) according to claim 6, **characterized in that** the radial pushing system (9) comprises a cylinder (90) capable of exerting a support force on a tab (91) pivotally mounted inside the barrel (3) between a support position against the spoke (2) and a free position.

8. The ejection device (1) according to claim 1, **characterized in that** it comprises detection means (10) for detecting a spoke (2) to be ejected in the barrel (3) and/or detecting a rear position of the piston (40) and/or detecting a rear position of the rod (41).
